# EUROPEAN PATENT APPLICATION

(11) **EP 2 301 810 A1**
(43) Date of publication of application: **30.03.2011**
(21) Application number: 10382254.0
(22) Date of filing: 23.09.2010
(51) Int. Cl.: B60R 19/52, B60K 11/08

(54) **Front grill for automobiles**

(30) Priority: 25.09.2009 ES 200930458 U
(71) Applicant: Seat, S.A., 08760 Martorell, Barcelona (ES)
(72) Inventor: Segura Santillana, Angél, 08760, Martorell - Barcelona (ES); Sanchez Tebar, Irma, 08760 -, Martorell - Barcelona (ES); Lobo Rabadàn, José Luis, 08760, Martorell -Barcelona (ES)
(74) Representative: Carvajal y Urquijo, Isabel

(57) **Abstract**

A front grill (2) for automobiles consisting of a peripheral frame (3) and a series of parallel strips (4) assembled between two of the opposite sides of the frame (3). The ends of said strips (4) each have aligned axial pivots (8), each with a collapsible radial fin (9). The opposite sides of the frame (3) between which the strips (4) are fitted have opposing pairs of openings (10) each with radial grooves (11) from their edges, and the pivots (8) with fins (9) are of a cross-section approximately the same as the outline of the grooved openings, for their through them. The peripheral frame (3) comprises an internal structure (5) subdivided into parts (6), along a plane perpendicular to the axis of alignment of the pairs of openings, and an outside decorative cover (7) over said structure (5).

## Description

### Field of the invention

This invention refers to a front grill for automobiles which conceals the -vehicle radiator and constitutes an external element or finish for the bodywork.

More specifically, the grill in the invention is of the type comprising a peripheral frame and a set of parallel strips fitted between two of the opposite sides of the frame, generally in a horizontal position.

### Background of the invention

External front radiator grills are already familiar which form part of the vehicle and which include strips joined to the frame of the grill itself, and unable to move. Said strips have a safety function, in addition to their aesthetic purpose in preventing the radiator from being seen from the exterior of the vehicle, ensuring that there is no,access to the hood closure so that it cannot be opened from outside the vehicle.

The space nowadays available inside vehicles to house the elements making them up is very reduced because ever more elements are introduced and maximum use is made of the run and position of those elements. This problem is more acute in small cars.

On cars with reduced external overhang for example it is common that the radiator and other elements are a short distance from the outside of the vehicle front, specifically from the external front grill. As a result, a slight frontal impact, for example during parking, may damage the radiator or any other component close to that external front cover, aggravated by the fact that these are elements of maximum importance in a vehicle.

When a vehicle receives a frontal impact from the outside, the strips making up the front grill are deformed and easily strike the radiator, because it is so close. Moreover, because of the transversal arrangement of the strips in relation to the radiator, the impact between them occurs with the edges of the strips nearest the radiator, so that the damage from the impact is greater than if the impact between the two involves flat surfaces.

### Description of the invention

The purpose of the invention is to eliminate the problems set out, using a grill designed so that, in case of a frontal shock, the distance between the strips on the grill and the radiator is increased, so avoiding, interference between these two components and, therefore, the damage this may cause to the radiator.

Thus the strips are fitted on the peripheral frame in fixed positions where they are immobilised, whereas in case of a frontal impact, these strips can turn freely, so that their larger surfaces will be substantially parallel to the radiator, so increasing the distance between strips and radiator while at the same time the flat surfaces of the two components are facing each other.

Thus, according to the invention, the ends of the strips each have aligned axial pivots, each of which has a collapsible radial fin. For their part, the opposite sides of the frame between which the strips are fitted have pairs of openings each of which has radial grooves running from their edges. The cross-section of the pivots with fins is approximately the same as the outline of the grooved openings so that said pivots with their fins fit into the grooved, openings on the frame sides.

With this structure, the strips on the grill are secured to the frame and cannot move because the radial fins of the pivots prevent them and, at the same time, the strips from turning. In the case of a frontal impact, the collapsible fins break at a section adjacent to the pivots, allowing them to turn in the openings on the sides of the frame, so that the strips are placed in a position in which their larger surfaces are parallel to the radiator and further away from it, so avoiding or reducing the damage which may be caused to the radiator.

In one form of design, the peripheral frame comprises an internal structure and a decorative cover over that structure. The internal structure is subdivided into two parts along a plane perpendicular to the alignment axis of the pairs of openings, while the decorative cover is one-piece, acting, as a component securing the two parts making up the structure.

The collapsible fins may incorporate a weakened section adjacent to the pivot to act as breakage in case of a -frontal impact.

In this design, the front grill strips are in a fixed position in the frame thanks to the fins on the axial pivots through which the strips are assembled on the opposite sides of the frame, and which prevent the pivots from turning. In this fixed position, the strips can be slightly inclined to admit and direct the cooling air toward the radiator.

In a slight frontal impact, the edges of the inclined strips receive the force of the impact, causing the collapsible radial fins to break so that the pivots on the strips can rotate freely in the openings on the sides of the frame. The rotation of the strips alters their position, increasing the space to the radiator of the engine, to prevent damage to it.

### Brief description of the drawings

The attached drawings show, without limitation, a front grill for automobiles constructed according to the invention. In the drawings:
Figure 1 is a front elevation of an automobile including the grill in the invention.
Figure 2 is a perspective breakdown of the front grill constructed according to the invention.
Figure 3 shows in perspective one end of one of the strips and the facing surface of the frame for assembly of said strip.
Figure 4 is a vertical cross-section of the front grill, taken along the cut IV-IV in figure 1.
Figure 5 is a view similar to that in figure 4, showing the position of the strips following frontal impact on the vehicle.
Figure 6 shows a perspective view of a variant- of the design of the strip end pivot.

### Detailed description of a design

A detailed description follows of the example of the design shown in the aforementioned drawings.

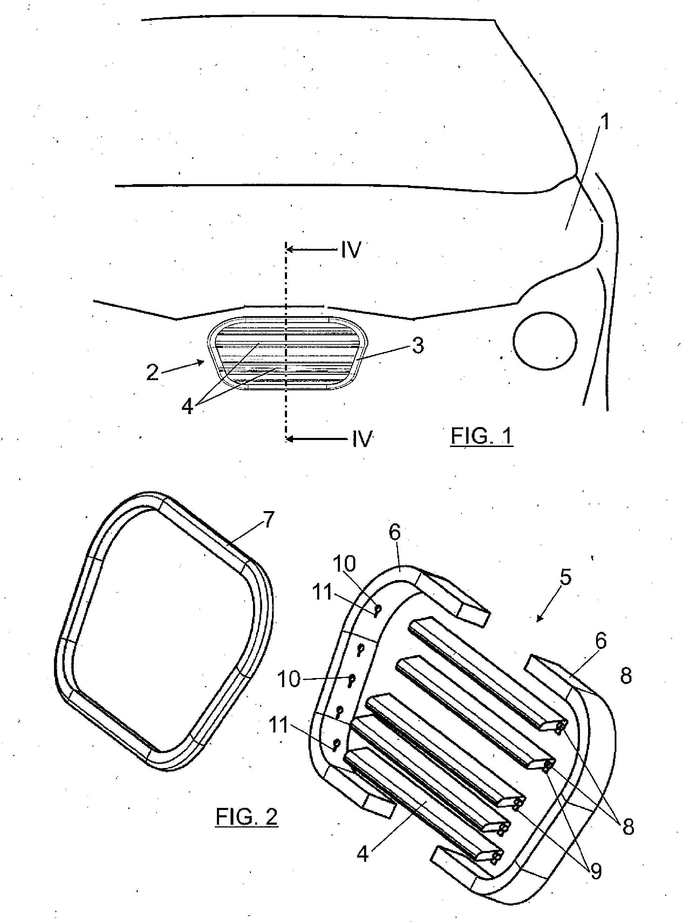

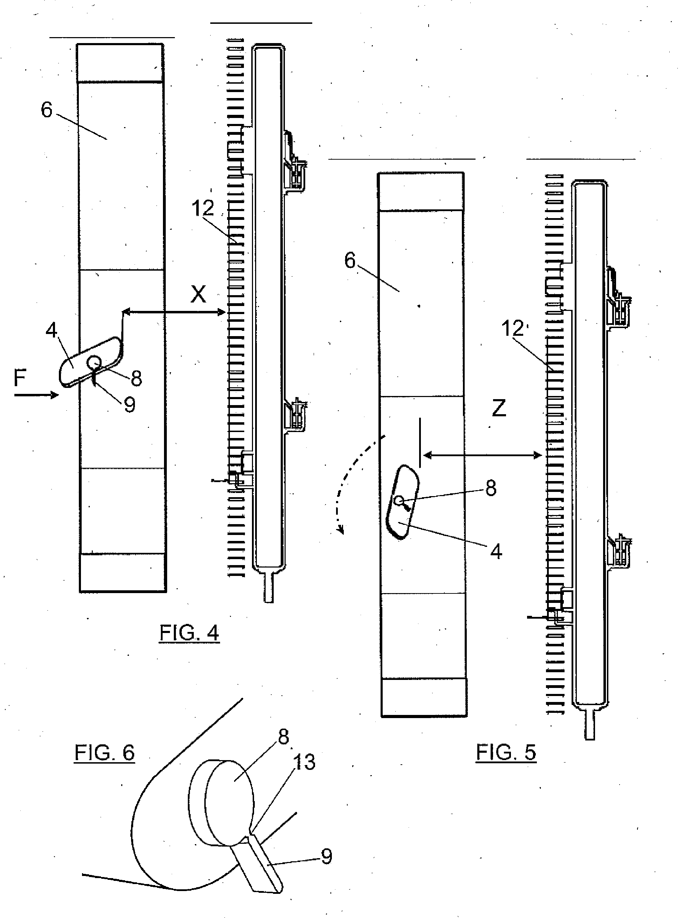

Figure 1 shows in perspective the front of an automobile 1 which includes a central grill 2 in front of the vehicle radiator, as seen in figure 4.

Said grill 2. comprises a peripheral frame 3 and a series of horizontal strips 4 fitted between two of the opposite sides of frame 3.

As can be seen in figure 2, the frame 3 consists of an internal structure 5 subdivided into two halves 6 along a plane perpendicular to the strips 4, and a one-piece decorative cover 7 over structure 5.

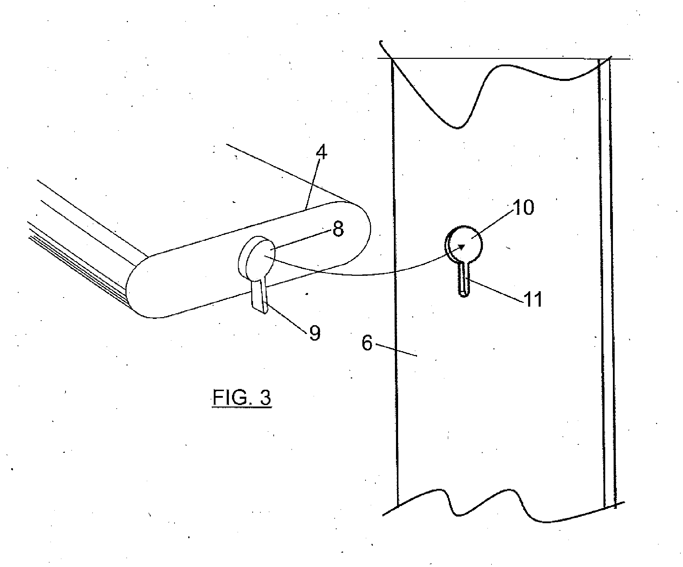

From their end sections, the strips 4 have cylindrical axial pivots 8, figure 3, each of which has a collapsible radial fin 9. For its part, the frame 4 of the grill has, openings 10, each with a radial groove 11, on the sides between which the strips 4 are fitted, specifically in the parts 6 into which the structure 5 is subdivided, figure 2. Pivot 8 with its radial fin 9 will be of an outline approximately the same as that of opening 10 with its radial groove 11, for insertion through them.

With this construction, to mount the grill 2 with the frame 3 dismantled, as shown in figure 2, the pivots 8 with their radial fins 9' are inserted into the openings 10 with grooves 11, so that the strips 4 are unable to turn because of the effect of the fins 9. The strips 4 are slightly inclined as shown in figure 4, and there is a separation X between said strips and the vehicle radiator 12. Should grill 2 suffer a slight front impact F, radial fin 9 on the pivots 8 breaks, enabling them to turn freely, so that the strips 4 take up the position shown in figure 5 where they are at a distance Z from the radiator 12 which is greater than distance X in figure 4 and, moreover, the fins 4 are positioned with their larger flat surfaces facing the radiator 12. These circumstances reduce the damage the strips 4 may cause to the radiator 12 in such a front impact.

To ensure breakage of the radial fins 9 movement, these fins may, as shown in figure 6, have a smaller section 13 adjacent to pivot 8, which may take the form or one or two grooves on one or two of the surfaces of fins 9.

The grill frame 3 is secured in place, once the strips 4 are fitted between the parts 5 of the structure 6, figure 2, by the decorative cover 7 which is tightly fitted onto the structure 5, covering it externally.

## Claims

1. A front automobile grill consisting of a peripheral frame and a series of parallel strips fitted between the two opposite sides of said frame, **characterized** because the strips each have, at the ends, aligned axial pivots, each of which has a collapsible radial fin; and where the opposite sides of the frame, between which the strips are fitted, have opposing pairs of openings each with radial grooves running from their edges been; the pivots with fins are of a cross section approximately the same as the outline of the openings with grooves, so that they can be inserted through them

2. A grill according to claim 1, **characterized** because the peripheral frame comprises an internal structure and an external decorative cover over said structure; said internal structure is subdivided into two parts along a plane perpendicular to the alignment axis of the pairs of openings.

3. A grill according to claim 1, wherein the collapsible fins incorporate a weakened section adjacent to the pivot.
